# EUROPEAN PATENT APPLICATION

(11) **EP 4 759 610 A1**
(43) Date of publication of application: **17.06.2026**
(21) Application number: 24851659.3
(22) Date of filing: 29.07.2024
(51) Int. Cl.: B60L 3/00, B60L 7/14, B60L 15/00, B60L 15/20, H02P 23/06

(54) **CONTROL DEVICE AND CONTROL PROGRAM FOR ROTATING ELECTRICAL MACHINE**

(30) Priority: 10.08.2023 JP 2023131424
(71) Applicant: DENSO CORPORATION, Kariya-city, Aichi 448-8661 (JP)
(72) Inventor: KAMIO, Shigeru, Kariya- city, Aichi 4488661 (JP); HIRAI, Taro, Kariya- city, Aichi 4488661 (JP)
(74) Representative: Kuhnen & Wacker Patent- und Rechtsanwaltsbüro PartG mbB
(86) International application number: PCT/JP2024/026983
(87) International publication number: WO 2025/033234

(57) **Abstract**

A target torque calculation unit (50) calculates a target torque, including a regenerative torque generated by regenerative power generation of a rotary electric machine (20), based on the operation amount of an accelerator operation member (11) and the operational state of a brake operation member (12). A monitoring torque calculation unit (70a) calculates a monitoring torque, which is used for monitoring the target torque, based on the operation amount of the accelerator operation member and the operational state of the brake operation member. An abnormality detection unit (70b) detects an acceleration abnormality when the target torque calculated by the target torque calculation unit exceeds the monitoring torque calculated by the monitoring torque calculation unit by a predetermined degree. A detection invalidation unit (70c) invalidates the detection of acceleration abnormality by the abnormality detection unit when the target torque is equal to or less than a mask threshold, and sets the mask threshold for a case where the brake operation member is not being operated higher than the mask threshold for a case where the brake operation member is being operated.

## Description

### CROSS REFERENCE TO RELATED APPLICATION

This application is based on Japanese Patent Application No. 2023-131424 filed on August 10, 2023, the contents of which are incorporated herein by reference.

### TECHNICAL FIELD

The present disclosure relates to a controller that executes control of a rotary electric machine and detects control abnormalities.

### BACKGROUND

For example, a controller calculates a target value of torque of a rotary electric machine, which serves as a driving power source for a vehicle, and a monitored target value of torque. The controller determines that an abnormality has occurred in the controller for the rotary electric machine when a deviation between the target value of torque and the monitored target value of torque is equal to or greater than a threshold value, and executes a fail-safe processing. Furthermore, in order to reduce erroneous execution of the fail-safe processing when it is not necessary to execute the fail-safe processing, the controller monitors the target value of torque only when the target value of torque is equal to or greater than a predetermined judgment value (see Patent Literature 1).

### PRIOR ART LITERATURE

### PATENT LITERATURE

Patent Literature 1: JP2021-112115A

### SUMMARY OF THE INVENTION

Incidentally, the target value of the torque of the rotary electric machine varies depending on whether regenerative power generation is being performed and whether a one-pedal mode, in which the vehicle is accelerated and decelerated solely by accelerator operation, is being executed. The controller described in Patent Literature 1 does not take into account changes in the target torque value caused by these factors, and there is still room for improvement in reducing erroneous detection of control abnormalities (false detection of control abnormalities) when the control of the rotary electric machine is not actually abnormal.

The present disclosure has been made to address the above-described issue, and its main object is to reduce erroneous detection of control abnormalities in a controller of a rotary electric machine.

A first aspect for solving the above issue is a controller for a rotary electric machine applied to a vehicle including an accelerator operation member, a brake operation member, and the rotary electric machine capable of transmitting power to drive wheels. The controller includes a target torque calculation unit that calculates a target torque including a regenerative torque generated by regenerative power generation of the rotary electric machine, based on an operation amount of the accelerator operation member and an operational state of the brake operation member. The controller also has a monitoring torque calculation unit that calculates a monitoring torque for monitoring the target torque, based on the operation amount of the accelerator operation member and the operational state of the brake operation member. An abnormality detection unit detects an acceleration abnormality when the target torque calculated by the target torque calculation unit exceeds the monitoring torque calculated by the monitoring torque calculation unit by more than a predetermined amount. A detection invalidation unit invalidates detection of the acceleration abnormality by the abnormality detection unit when the target torque is equal to or less than a mask threshold, and sets the mask threshold to be greater when the brake operation member is not operated than when the brake operation member is operated.

According to the above configuration, the target torque calculation unit calculates the target torque, including the regenerative torque generated by regenerative power generation of the rotary electric machine, based on the operation amount of the accelerator operation member and the operational state of the brake operation member. Therefore, generally, the greater the operation amount of the accelerator operation member, the larger the target torque becomes (toward vehicle acceleration), and when the brake operation member is operated, the target torque becomes smaller (toward vehicle deceleration due to regenerative power generation). The monitoring torque calculation unit calculates the monitoring torque, which is used for monitoring the target torque, based on the operation amount of the accelerator operation member and the operational state of the brake operation member. Therefore, the monitoring torque is calculated in the same manner as the target torque. The abnormality detection unit detects an acceleration abnormality when the target torque calculated by the target torque calculation unit exceeds the monitoring torque calculated by the monitoring torque calculation unit by the predetermined degree. Therefore, for example, when the abnormality occurs in the target torque calculation unit and the target torque becomes greater than the driver's intention for the vehicle, it is possible to detect the acceleration hazard abnormality. It should be noted that, when an acceleration abnormality is detected, fail-safe processing is generally executed.

The detection invalidation unit disables the detection of the acceleration abnormality by the abnormality detection unit when the target torque is equal to or less than the mask threshold. Therefore, when the target torque is equal to or less than the mask threshold and it is unnecessary to perform the acceleration abnormality detection, it is possible to reduce erroneous detection of the acceleration abnormality. Here, when the brake operating member is not being operated, the target torque becomes larger than when the brake operating member is being operated. Therefore, a range of target torque values for which it is unnecessary to perform the acceleration abnormality detection expands toward higher target torque values. Regarding this, the detection invalidation unit sets the mask threshold for a case where the brake operating member is not being operated to be larger than the mask threshold for a case where the brake operating member is being operated. Therefore, it becomes easier to appropriately set the mask threshold according to whether the brake operating member is being operated. Accordingly, when the regenerative power generation of the rotary electric machine is being performed, it is possible to reduce both erroneous detection of acceleration abnormalities (control abnormalities) and oversight of acceleration abnormality detection. When the mask threshold is excessively large, there is a risk that acceleration abnormalities may not be detected even when such abnormalities occur, leading to missed detection of acceleration abnormalities.

According to a second aspect, the controller relates to a vehicle capable of executing a one-pedal mode in which the vehicle is accelerated and decelerated based on operation of the accelerator operation member. The target torque calculation unit also calculates the target torque, including the regenerative torque, based on whether the one-pedal mode is being executed. The detection invalidation unit sets the mask threshold to be greater when the one-pedal mode is not being executed than when the one-pedal mode is being executed.

According to the above configuration, the vehicle is capable of executing a one-pedal mode in which the vehicle is accelerated and decelerated based on the operation of the accelerator operating member. Then, the target torque calculation unit further calculates the target torque, including the regenerative torque, based on whether the one-pedal mode is being executed. Therefore, when the one-pedal mode is not being executed, the target torque becomes larger than when the one-pedal mode is being executed. Therefore, a range of target torque values for which it is unnecessary to perform the acceleration abnormality detection expands toward higher target torque values. Regarding this, the detection invalidation unit sets the mask threshold for when the one-pedal mode is not being executed to be larger than the mask threshold for when the one-pedal mode is being executed. Therefore, it becomes easier to appropriately set the mask threshold according to whether the one-pedal mode is being executed. Accordingly, when the one-pedal mode can be executed, it is possible to reduce both erroneous detection of acceleration abnormalities and oversight of acceleration abnormality detection.

The regenerative torque (target torque) calculated by the target torque calculation unit varies according to the operating state of the brake operating member and whether the one-pedal mode is being executed. Therefore, in accordance with changes in the regenerative torque due to these factors, a range of target torque in which it is not necessary to perform detection of the acceleration abnormalities also changes.

According to a third aspect, the detection invalidation unit sets the mask threshold based on the regenerative torque set according to the operational state of the brake operation member and whether the one-pedal mode is being executed. Accordingly, it becomes easier to appropriately set the mask threshold in response to changes in the regenerative torque.

According to a fourth aspect, the abnormality detection unit detects a deceleration abnormality when the target torque calculated by the target torque calculation unit is equal to or less than a deceleration abnormality threshold. The deceleration abnormality threshold is set so that the threshold is smaller when the brake operation member is operated than when the brake operation member is not operated.

According to the above configuration, the abnormality detection unit detects the deceleration abnormality when the target torque calculated by the target torque calculation unit is equal to or less than the deceleration abnormality threshold. Therefore, for example, when an abnormality occurs in the target torque calculation unit and the target torque becomes smaller than the driver's intention, the deceleration abnormality can be detected. It should be noted that, when the deceleration abnormality is detected, the fail-safe processing is generally executed.

Here, when the brake operating member is being operated, the target torque becomes smaller than when the brake operating member is not being operated. Therefore, a range of the target torque in which the deceleration abnormality should be detected is reduced toward the lower side of the target torque. Regarding this, the abnormality detection unit sets the deceleration abnormality threshold to be smaller when the brake operating member is being operated than when the brake operating member is not being operated. Therefore, it becomes easier to appropriately set the deceleration abnormality threshold without excess or deficiency according to whether the brake operating member is being operated. Accordingly, when detecting the deceleration abnormality, it is possible to reduce both the false detection of the deceleration abnormalities (control abnormalities) and failure to detect actual deceleration abnormalities. When the deceleration abnormality threshold is excessively small, there is a risk of missed detection of deceleration abnormalities, wherein a deceleration abnormality may not be detected even when it has actually occurred.

According to a fifth aspect, the vehicle is capable of executing a one-pedal mode in which acceleration and deceleration are controlled based on operation of the accelerator operation member. The target torque calculation unit also calculates the target torque, including the regenerative torque, based on whether the one-pedal mode is being executed. The abnormality detection unit sets the deceleration abnormality threshold to be smaller when the one-pedal mode is being executed than when the one-pedal mode is not being executed.

When the one-pedal mode is being executed, the target torque becomes smaller than when the one-pedal mode is not being executed. Therefore, a range of the target torque in which the deceleration abnormality should be detected is reduced toward the lower side of the target torque. Regarding this, the abnormality detection unit sets the deceleration abnormality threshold to be smaller when the one-pedal mode is being executed than when the one-pedal mode is not being executed. Therefore, it becomes easier to appropriately set the deceleration abnormality threshold according to whether the one-pedal mode is being executed. Accordingly, when the one-pedal mode can be executed, it is possible to reduce both the false detection of the deceleration abnormalities (control abnormalities) and the failure to detect the actual deceleration abnormalities.

The regenerative torque (target torque) calculated by the target torque calculation unit varies according to the operating state of the brake operating member and whether the one-pedal mode is being executed. Therefore, a range of target torque in which deceleration abnormalities should be detected also changes in accordance with variations in regenerative torque caused by these factors.

According to a sixth aspect, the abnormality detection unit is set the deceleration abnormality threshold based on the operational state of the brake operation member and whether the one-pedal mode is being executed. Therefore, it becomes easier to appropriately set the deceleration abnormality threshold according to changes in the regenerative torque.

According to a seventh aspect, a control program is applicable to a vehicle including an accelerator operation member, a brake operation member, and a rotary electric machine capable of transmitting power to drive wheels. The control program causes a computer to calculate a target torque, including a regenerative torque generated by regenerative power generation of the rotary electric machine, based on an operation amount of the accelerator operation member and an operational state of the brake operation member. The control program also causes the computer to calculate a monitoring torque for monitoring the target torque, based on the operation amount of the accelerator operation member and the operational state of the brake operation member. The computer detects an acceleration abnormality when the calculated target torque exceeds the calculated monitoring torque by more than a predetermined amount. The computer invalidates detection of the acceleration abnormality when the target torque is equal to or less than a mask threshold, and sets the mask threshold to be greater when the brake operation member is not operated than when the brake operation member is operated.

According to the above configuration, by having a computer execute a control program applied to a vehicle, the same effects as those of the first aspect can be achieved.

### BRIEF DESCRIPTION OF DRAWINGS

FIG. 1 is a block diagram of a vehicle.
FIG. 2 is a functional block diagram illustrating a processing of a vehicle controller.
FIG. 3 is a functional block diagram illustrating a processing of a monitoring unit.
FIG. 4 is a diagram illustrating an example of a target torque map.
FIG. 5 is a diagram illustrating a relationship between a target torque and an abnormality threshold.
FIG. 6 is a diagram illustrating a mask threshold during brake ON.
FIG. 7 is a diagram illustrating the mask threshold when the brake is OFF and one-pedal is ON.
FIG. 8 is a diagram illustrating the mask threshold when the brake is OFF and the one-pedal is OFF.
FIG. 9 is a flowchart illustrating a procedure for calculating the target torque.
FIG. 10 is a flowchart illustrating a procedure for detecting acceleration hazard anomalies.
FIG. 11 is a flowchart illustrating a procedure for setting the mask threshold.
FIG. 12 is a flowchart illustrating a procedure for detecting deceleration hazard anomalies.
FIG. 13 is a flowchart illustrating a procedure for setting a deceleration anomaly threshold.
FIG. 14 is a flowchart illustrating a procedure for a fail-safe processing.

### DETAILED DESCRIPTION

Hereinafter, an embodiment implemented in a controller for a rotary electric machine mounted on a vehicle will be described with reference to the drawings. The vehicle is, for example, a hybrid vehicle or an electric vehicle that uses a rotary electric machine as a driving power source.

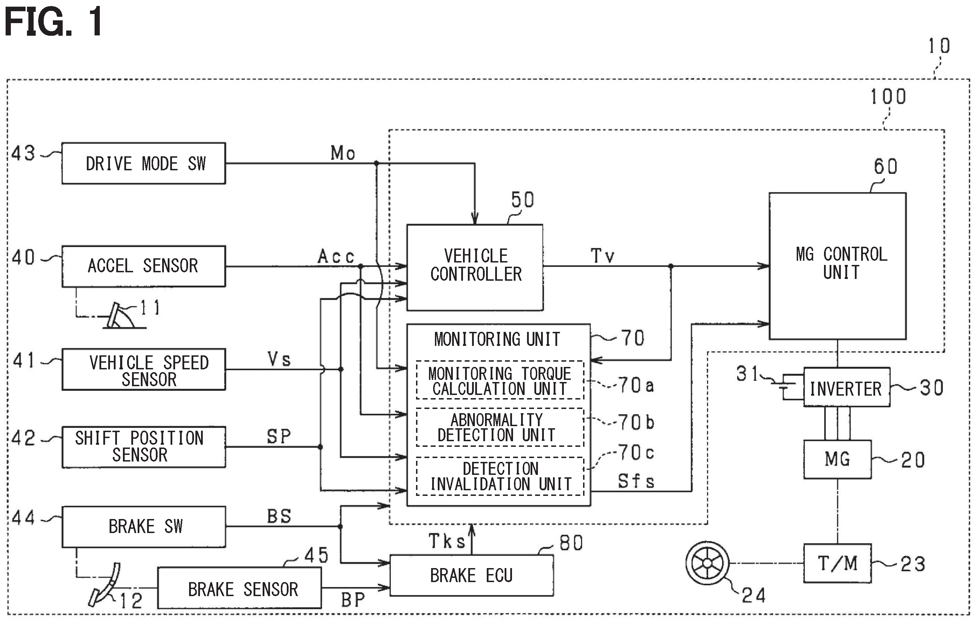

As shown in FIG. 1, the vehicle 10 is equipped with the rotary electric machine 20, an inverter 30, and a storage battery 31 serving as an electric storage device. The rotary electric machine 20 has three-phase stator windings and a rotor, for example, a permanent magnet synchronous machine.

The vehicle 10 is equipped with a transmission 23 and drive wheels 24. The rotor of the rotary electric machine 20 is configured to transmit power to the drive wheels 24 via the transmission 23. In other words, the rotary electric machine 20 serves as the driving power source for the vehicle 10.

The stator winding of the rotary electric machine 20 is electrically connected to the storage battery 31 via the inverter 30. The inverter 30 includes upper and lower arm switches. The storage battery 31 is a battery pack (battery module) consisting of multiple cells connected in series, for example, a secondary battery such as a lithium-ion or nickel-metal hydride storage battery.

The vehicle 10 is equipped with an accelerator sensor 40, a vehicle speed sensor 41, a shift position sensor 42, a driving mode switch 43, a brake switch 44, and a brake sensor 45. The accelerator sensor 40 detects a pedal operation amount Acc, which is a depression amount of an accelerator pedal 11, serving as an accelerator operation member for a driver (operator). The vehicle speed sensor 41 detects a vehicle speed Vs, which is a traveling speed of the vehicle 10. The brake sensor 45 detects a brake operation amount Bp, which is a depression amount of a brake pedal 12 serving as a brake operation member for the driver.

The shift position sensor 42 detects a shift position SP, which is a position of a shift lever of the transmission 23 operated by the driver. The shift position SP of the present embodiment includes a parking range (P range) used when parking the vehicle 10, a reverse range (R range) for instructing reverse movement of the vehicle 10, a neutral range (N range) in which power transmission between the rotor and the drive wheels 24 is interrupted, and a drive range (D range) for instructing forward movement of the vehicle 10.

The driving mode switch 43 is used to set torque output characteristics of the rotary electric machine 20 and is operated by the driver. By operating the driving mode switch 43, the driving mode of the vehicle 10 is set. The driving mode include an eco mode, a normal mode, a sport mode, and a one-pedal mode. The eco mode is a mode in which energy efficiency of the vehicle 10, namely electric power consumption rather than output, is prioritized. The sport mode is a mode in which driving performance of the vehicle 10, namely output rather than electric power consumption, is prioritized. The normal mode is an intermediate mode between the eco mode and the sport mode. The one-pedal mode is a mode in which the vehicle 10 is accelerated and decelerated based on operation of the accelerator pedal 11.

The brake switch 44 turns ON when the brake pedal 12 is depressed, and turns OFF when it is not depressed.

Output signals from each of the sensors 40 to 42 and a driving mode signal Mo indicating the operating state of the driving mode switch 43 are transmitted to a controller 100 provided in the vehicle 10. The brake signal BS, which indicates the ON/OFF state of the brake switch 44, is transmitted to the controller 100 and to a brake ECU 80 provided in the vehicle 10. The brake operation amount Bp detected by the brake sensor 45 is transmitted to the brake ECU 80. The controller 100 (computer) includes a vehicle controller 50, an MG control unit 60, and a monitoring unit 70.

As shown in FIGS. 1 to 3, the vehicle controller 50 and the monitoring unit 70 receive, as redundant signals, the pedal operation amount Acc, the vehicle speed Vs, and the brake signal BS, as well as, as a non-redundant signal, the driving mode signal Mo. In addition, the output signal from the shift position sensor 42 is also input to the vehicle controller 50 and the monitoring unit 70. It should be noted that the brake operation amount Bp is a redundant signal.

To explain using the vehicle controller 50 as an example, a redundant signal refers to a signal input to the vehicle controller 50 from a sensor that is made redundant, or a signal input to the vehicle controller 50 from a sensor via a redundant signal line. A non-redundant signal is a signal input to the vehicle controller 50 from a sensor that is not made redundant, or a signal input to the vehicle controller 50 from a sensor via a single signal line.

Sensor redundancy is realized, for example, by a configuration in which each of a detection element, a signal processing circuit, and an output unit constituting the sensor is duplicated. Alternatively, sensor redundancy can be realized by using a single detection element and duplicating each of the signal processing circuit and output unit. Signal line redundancy can be realized, for example, by a configuration in which the sensor and the vehicle controller 50 are connected by two or more signal lines.

A non-redundant sensor is a sensor that includes a single detection element, a signal processing circuit, and an output unit. Non-redundant signal lines refer to a configuration in which the sensor and the vehicle controller 50 are connected by a single signal line.

The redundant signals are more reliable signals and the non-redundant signals are less reliable than the redundant signals.

The vehicle controller 50 (target torque calculator) calculates a target torque of the rotary electric machine 20 at predetermined control cycles based on the pedal operation amount Acc, the vehicle speed Vs, the driving mode signal Mo, and the brake signal BS. The target torque is calculated by the brake ECU 80 and includes a regenerative torque Tks received by the vehicle controller 50. When the target torque is a positive value, it attempts to accelerate the vehicle 10 in its direction of travel and when the target torque is a negative value, it attempts to decelerate the vehicle 10. The vehicle controller 50 applies a gradual change process to the calculated target torque before outputting it. The gradual change process is a process in which, when the target torque changes, a previous target torque is gradually adjusted toward a new target torque. The gradual change process is intended to suppress abrupt changes (torque shock) in the torque of the rotary electric machine 20 and to prevent a deterioration in drivability. The gradual change process is, for example, a well-known annealing process or rate process.

The MG control unit 60 performs switching control of the upper and lower arm switches of the inverter 30 in order to control the torque of the rotary electric machine 20 according to the target torque Tv, which has undergone the gradual change process and is output from the vehicle controller 50. More specifically, the MG control unit 60 performs traction drive control or regenerative drive control. The traction drive control is switching control that converts DC power output from the storage battery 31 into AC power and supplies it to the stator windings. When traction drive control is performed, the rotary electric machine 20 functions as a motor and generates traction torque. The regenerative drive control is switching control that converts the AC power generated by the rotary electric machine 20 into the DC power and supplies it to the storage battery 31. When regenerative drive control is performed, the rotary electric machine 20 functions as a generator and generates regenerative torque. The regenerative torque applies braking force to the wheels.

The monitoring unit 70 includes a monitoring torque calculation unit 70a, an abnormality detection unit 70b, and a detection invalidation unit 70c. When the vehicle controller 50 performs monitoring, the monitoring torque calculation unit 70a calculates monitoring torque at predetermined control cycles based on the pedal operation amount Acc, the vehicle speed Vs, the driving mode signal Mo, and the brake signal BS. The monitoring torque is calculated by the brake ECU 80 and includes the regenerative torque Tks received by the monitoring unit 70. Then, the monitoring torque calculation unit 70a applies the gradual change process to the calculated monitoring torque and outputs it. The gradual change process executed by the monitoring torque calculation unit 70a is either an annealing process or a rate process, and the annealing process and the rate process executed by the monitoring torque calculation unit 70a are assumed to be the same as the annealing process and the rate process executed by the vehicle controller 50. It is not essential that the annealing process executed by the vehicle controller 50 and the monitoring torque calculation unit 70a be the same, and it is not essential that the rate process executed by the vehicle controller 50 and the monitoring torque calculation unit 70a be the same. It is also permissible to simplify the gradual change process of the monitoring torque when performing the gradual change process, so that the change in the monitoring torque is not excessively restricted.

The abnormality detection unit 70b performs abnormality processing in which it outputs a fail-safe signal Sfs, indicating that an abnormality has occurred in the vehicle controller 50, to the MG control unit 60, according to a comparison result between the target torque Tv after the gradual change processing output from the vehicle controller 50 and the monitoring torque Tvr after the gradual change processing. The abnormality detection unit 70b detects an acceleration hazard abnormality (acceleration abnormality) when the target torque calculated by the vehicle controller 50 exceeds the monitoring torque calculated by the monitoring torque calculation unit 70a by a predetermined amount (predetermined degree). The fail-safe signal Sfs is a signal that instructs the output torque of the rotary electric machine 20 to be reduced to a creep torque, or a signal that instructs the output torque of the rotary electric machine 20 to be reduced to zero to stop the rotary electric machine 20. When the MG control unit 60 determines that the fail-safe signal Sfs has been input, it performs processing to reduce the output torque of the rotary electric machine 20 to the creep torque, or processing to reduce the output torque of the rotary electric machine 20 to zero.

The detection invalidation unit 70c invalidates the detection of the acceleration hazard abnormality by the abnormality detection unit 70b when the target torque Tv after the gradual change processing is equal to or less than a mask threshold Tmsk. The mask threshold Tmsk will be described later. As an aspect of invalidating the detection of acceleration hazard abnormalities by the abnormality detection unit 70b, in the present embodiment, the detection of acceleration hazard abnormalities is not executed. It is also possible to invalidate the detection of acceleration hazard abnormalities by ignoring the detection results of acceleration hazard abnormalities.

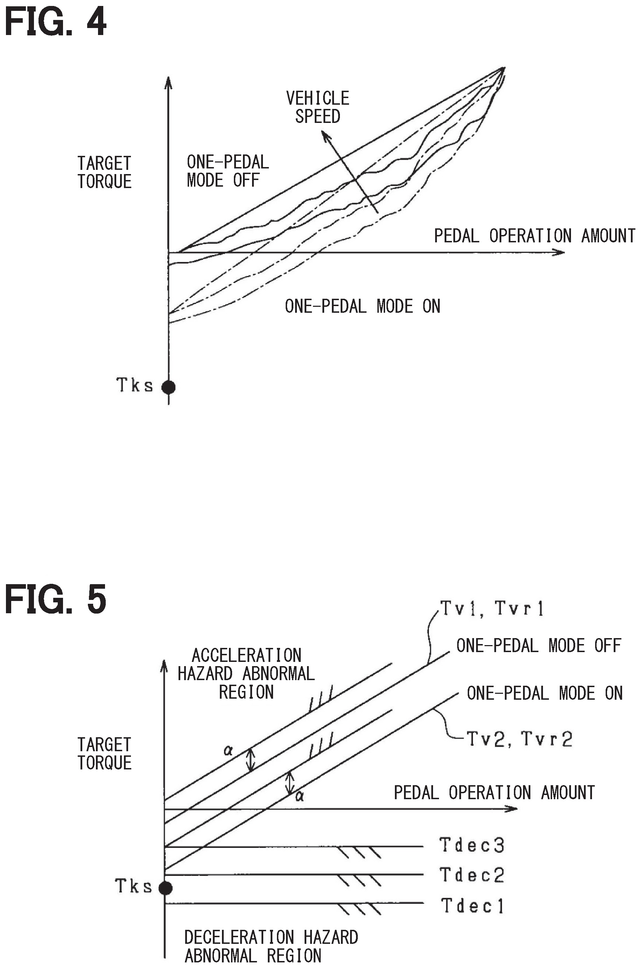

The brake ECU 80 calculates a deceleration torque required by the vehicle 10 based on the brake operation amount Bp. The brake ECU 80 calculates the regenerative torque Tks by subtracting the deceleration torque generated by the brake (not shown) from the deceleration torque required by the vehicle 10. Further, when the one-pedal mode is ON, the brake ECU 80 calculates the regenerative torque Tks for a case where the pedal operation amount Acc is small, based on the target torque map M1 for one-pedal mode ON as shown in FIG. 4. The brake ECU 80 transmits the calculated regenerative torque Tks to the controller 100.

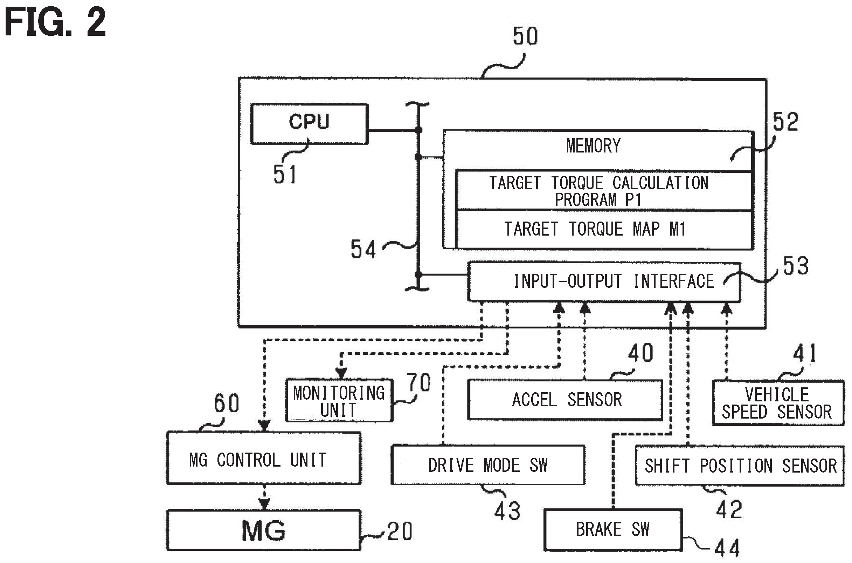

As shown in FIG. 2, the vehicle controller 50 includes a central processing device (i.e., CPU) 51, a memory 52, an input-output interface 53, and a bus 54. The CPU 51, the memory 52, and the input-output interface 53 are connected via the bus 54 so as to enable bidirectional communication. The memory 52 includes a non-volatile memory, for example, read only memory (i.e., ROM) that stores a target torque calculation program P1 for calculating the target torque Tv, and a memory, for example, a random access memory (i.e., RAM) that can be read from and written to by the CPU 51.

The non-volatile memory constituting the memory 52 further stores a target torque map M1 used for calculating the target torque. The target torque map M1 is map information in which the target torque is defined in association with the driving mode, the pedal operation amount Acc, the vehicle speed Vs, and the brake signal BS. The CPU 51 calculates the target torque by loading and executing the target torque calculation program P1, which is stored in the memory 52, into the memory that allows read and write operations. The CPU 51 applies the gradual change process to the calculated target torque.

Then the accelerator sensor 40, the vehicle speed sensor 41, the shift position sensor 42, the driving mode switch 43, the brake switch 44, the MG control unit 60, and the monitoring unit 70 are each connected to the input-output interface 53 via respective signal lines. Detection signals are input from the accelerator sensor 40, the vehicle speed sensor 41, the shift position sensor 42, the driving mode switch 43, and the brake switch 44. At least the accelerator sensor 40, the vehicle speed sensor 41, the shift position sensor 42, and the brake switch 44 input redundant signals, while the driving mode switch 43 inputs a non-redundant signal. That is, in the present embodiment, the accelerator sensor 40, the vehicle speed sensor 41, the shift position sensor 42, and the brake switch 44 are sensors (switches) that are redundant, while the driving mode switch 43 is a sensor that is not redundant.

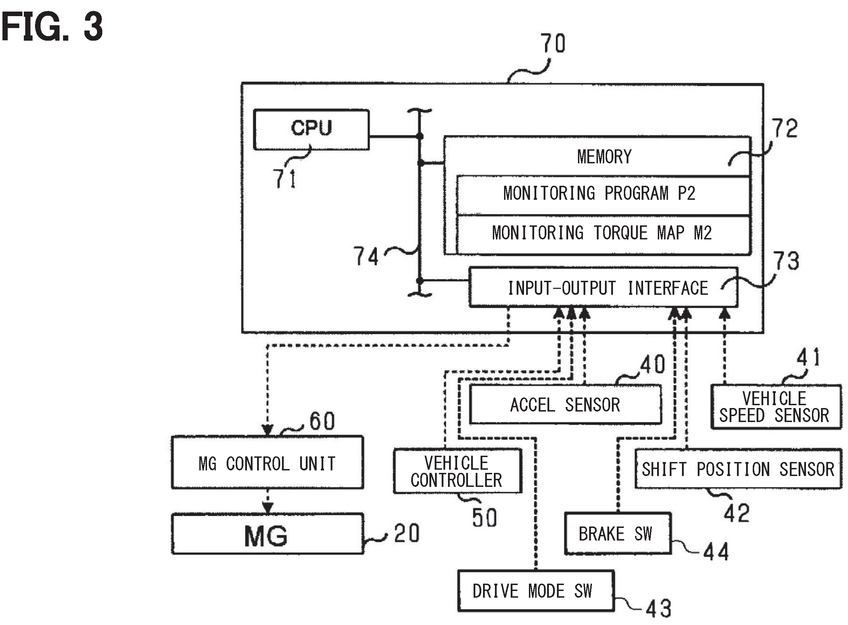

As shown in FIG. 3, the monitoring unit 70 includes a CPU 71, a memory 72, an input-output interface 73, and a bus 74. Through these components, functions of the monitoring torque calculation unit 70a, the abnormality detection unit 70b, and the detection invalidation unit 70c are implemented. The CPU 71, the memory 72, and the input-output interface 73 are connected to enable bidirectional communication via the bus 74. The memory 72 includes a non-volatile memory for example, read only memory (i.e., ROM) that stores a monitoring program P2 for calculating the monitoring torque and making abnormality determinations of the vehicle controller 50 to decide the execution of fail-safe, as well as a memory for example, a random access memory (i.e., RAM) that can be read from and written to by the CPU 71. It should be noted that a control program includes the target torque calculation program P1 and the monitoring program P2.

The non-volatile memory constituting the memory 72 further stores a monitoring torque map M2, which is used for calculating the monitoring torque. The monitoring torque map M2 is map information in which the monitoring torque Tvr is defined in association with the driving mode, the pedal operation amount Acc, the vehicle speed Vs, and the brake signal BS.

By loading the monitoring program P2 stored in the memory 72 into a writable memory and executing it, the CPU 71 calculates the monitoring torque. The CPU 71 applies the gradual change process to the calculated monitoring torque. The CPU 71 compares the monitoring torque Tvr subjected to the gradual change process with the target torque Tv subjected to the gradual change process to determine whether to execute the fail-safe control. Additionally, the CPU 71 compares the monitoring torque Tvr subjected to the gradual change process with a deceleration anomaly threshold Tdec to determine whether to execute the fail-safe control. The deceleration anomaly threshold Tdec will be described later.

The input-output interface 73 is connected via signal lines to the accelerator sensor 40, the vehicle speed sensor 41, the shift position sensor 42, the driving mode switch 43, the brake switch 44, the vehicle controller 50, and the MG control unit 60. Detection signals are input from the accelerator sensor 40, the vehicle speed sensor 41, the shift position sensor 42, the driving mode switch 43, and the brake switch 44.

FIG. 4 is a diagram showing an example of the target torque map M1. A state when the one-pedal mode is OFF is indicated by a solid line, and a state when the one-pedal mode is ON is indicated by a dash-dot-dash line. Both when the one-pedal mode is OFF and when it is ON, the target torque increases as the pedal operation amount Acc increases. In addition, as the vehicle speed Vs increases, the rise of the target torque in response to the pedal operation amount Acc becomes faster. When the one-pedal mode is OFF, the target torque becomes approximately zero when the pedal operation amount Acc is zero. On the other hand, when the one-pedal mode is ON, the target torque becomes a negative value (deceleration torque) when the pedal operation amount Acc is zero. In addition, when the brake pedal 12 is being depressed, the target torque becomes the regenerative torque Tks. The regenerative torque Tks is smaller than the target torque when the one-pedal mode is ON and the pedal operation amount Acc is zero. It should be noted that the monitoring torque map M2 (not shown) is configured with a similar trend to the target torque map M1, but it does not necessarily have to be identical to the target torque map M1.

FIG. 5 is a diagram showing a relationship between the target torque and the abnormality threshold value. When the one-pedal mode is OFF and both the vehicle controller 50 and the monitoring unit 70 are operating normally, the target torque Tv1 and the monitoring torque Tvr1 become approximately equal values. On the other hand, for example, when an abnormality occurs in the vehicle controller 50 and the monitoring torque Tvr1 becomes excessively large, a deviation ΔT (ΔT = Tv1 - Tvr1) between the target torque Tv1 and the monitoring torque Tvr1 becomes greater than a deviation threshold α (ΔT > α), and the target torque Tv1 enters an acceleration hazard abnormal region. As a result, it is detected that an acceleration hazard abnormality (acceleration abnormality) has occurred. When the one-pedal mode is ON, the target torque Tv2 and the monitoring torque Tvr2 are calculated to be smaller than the target torque Tv1 and the monitoring torque Tvr1. However, in other respects, acceleration hazard abnormalities are detected in the same manner as when the one-pedal mode is OFF. Furthermore, when the brake pedal 12 is being depressed, the acceleration hazard abnormality is detected by comparing the target torque Tv and the monitoring torque Tvr corresponding to the regenerative torque Tks. It should be noted that the deceleration abnormality thresholds Tdec (Tdec1-Tdec3) will be described later.

As described above, the target torque of the rotary electric machine 20 varies depending on whether regenerative power generation is being performed (the operating state of the brake pedal 12) and whether the one-pedal mode is ON or OFF (whether the one-pedal mode is being executed). Therefore, in accordance with changes in the regenerative torque Tks due to these factors, a range of target torque in which it is not necessary to perform detection of the acceleration hazard abnormalities also changes. Therefore, in the present embodiment, a region (mask region) in which detection of the acceleration hazard abnormalities is disabled by the detection invalidation unit 70c is made variable according to the operating state of the brake pedal 12 and the ON/OFF state of the one-pedal mode.

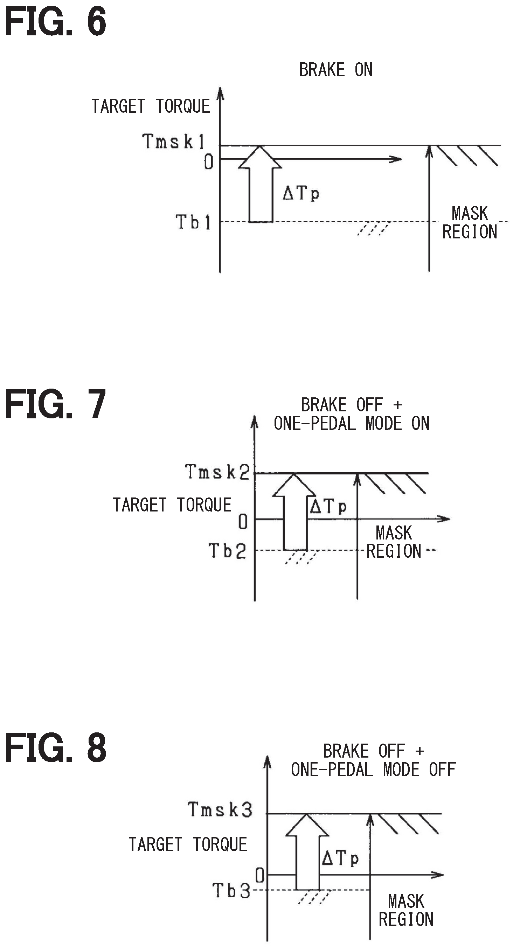

FIG. 6 is a diagram showing the mask threshold Tmsk1 when the brake is ON. In a region where the target torque is equal to or less than the mask threshold Tmsk1 when the brake is ON, the detection of the acceleration hazard abnormalities is disabled. The mask threshold Tmsk1 is a value obtained by adding an allowable torque variation ΔTp, which is an amount of unintended acceleration torque variation that is permissible, to a minimum value Tb1 (a strongest deceleration torque) of the regenerative torque Tks requested by the brake ECU 80 when the brake is ON under normal conditions. The allowable torque variation ΔTp is, for example, a torque of the rotary electric machine 20 required to accelerate the vehicle 10 at an acceleration of 0.2 [G]. A region where the target torque is smaller than the minimum value Tb1 is the region that is not used under normal conditions. The minimum value Tb1 is a known value, and the detection invalidation unit 70c has previously acquired (is aware of) the minimum value Tb1.

FIG. 7 is a diagram showing a mask threshold Tmsk2 when the brake is OFF and the one-pedal mode is ON. The mask threshold Tmsk2 is a value obtained by adding the allowable torque variation ΔTp to the minimum value Tb2 of the regenerative torque Tks requested by the brake ECU 80 when the brake is OFF and the one-pedal mode is ON under normal conditions. The minimum value Tb2 of the regenerative torque Tks when the brake is OFF and the one-pedal mode is ON is greater than the minimum value Tb1 of the regenerative torque Tks when the brake is ON. The minimum value Tb2 is a known value, and the detection invalidation unit 70c has previously acquired (is aware of) the minimum value Tb2.

FIG. 8 is a diagram showing a mask threshold Tmsk3 when the brake is OFF and the one-pedal mode is OFF. The mask threshold Tmsk3 is a value obtained by adding the allowable torque variation ΔTp to the minimum value Tb3 of the regenerative torque Tks requested by the brake ECU 80 when the brake is OFF and the one-pedal mode is OFF under normal conditions. The minimum value Tb3 of the regenerative torque Tks when the brake is OFF and the one-pedal mode is OFF is greater than the minimum value Tb2 of the regenerative torque Tks when the brake is OFF and the one-pedal mode is ON. The minimum value Tb3 is a known value, and the detection invalidation unit 70c has previously acquired (is aware of) the minimum value Tb3.

That is, the detection invalidation unit 70c sets the mask threshold Tmsk3 for when the one-pedal mode is not being executed to be greater than the mask threshold Tmsk2 for when the one-pedal mode is being executed. In addition, the detection invalidation unit 70c sets the mask thresholds Tmsk2 and Tmsk3 for when the brake pedal 12 is not being operated to be greater than the mask threshold Tmsk1 for when the brake pedal 12 is being operated. In this way, the detection invalidation unit 70c sets the respective mask thresholds Tmsk1, Tmsk2, and Tmsk3 based on the minimum values Tb1, Tb2, and Tb3 of the regenerative torque Tks, which are determined according to the operating state of the brake pedal 12 and whether the one-pedal mode is being executed.

When the mask threshold Tmsk (Tmsk1 to Tmsk3) is excessively large, there is a risk that an acceleration hazard abnormality may not be detected even when an acceleration hazard abnormality has occurred, resulting in a failure to detect the acceleration hazard abnormality. In this regard, as described above, by setting the mask threshold Tmsk according to the operating state of the brake pedal 12 and whether the one-pedal mode is being executed, the mask threshold Tmsk can be set appropriately without excess or deficiency.

In addition, when the brake pedal 12 is being operated, the regenerative torque Tks is calculated by the brake ECU 80 and transmitted to the controller 100. The vehicle controller 50 sets the target torque to the regenerative torque Tks when the brake switch 44 is ON. Therefore, when the brake pedal 12 is being operated, the target torque becomes smaller than when the brake pedal 12 is not being operated. Accordingly, when the brake pedal 12 is being operated, a range of target torque in which a deceleration abnormality should be detected is reduced toward a lower side of the target torque.

Therefore, as shown in FIG. 5, the abnormality detection unit 70b sets the deceleration abnormality threshold Tdec1 for when the brake is ON to be smaller than the deceleration abnormality threshold Tdec2 for when the brake is OFF and the one-pedal mode is ON, and the deceleration abnormality threshold Tdec3 for when both the brake is OFF and the one-pedal mode is OFF. The deceleration abnormality threshold Tdec1 when the brake is ON is a value smaller than the regenerative torque Tks.

Additionally, when the one-pedal mode is being executed, the target torque becomes smaller than when the one-pedal mode is not being executed. Therefore, when the one-pedal mode is being executed, a range of target torque in which a deceleration abnormality should be detected is reduced toward the lower side of the target torque.

Therefore, the abnormality detection unit 70b sets the deceleration abnormality threshold Tdec2 for when the brake is OFF and the one-pedal mode is ON to be smaller than the deceleration abnormality threshold Tdec3 for when both the brake is OFF and the one-pedal mode is OFF.

When the deceleration abnormality thresholds Tdec (Tdec1 to Tdec3) are excessively small, there is a risk that the deceleration hazard abnormality (deceleration abnormality) will not be detected even when the deceleration hazard abnormality occurs. In other words, there is a possibility of missing the detection of the deceleration hazard abnormality. In this regard, by setting the deceleration abnormality threshold Tdec according to the operating state of the brake pedal 12 and the execution status of the one-pedal mode as described above, the deceleration abnormality threshold Tdec can be appropriately set without excess or deficiency.

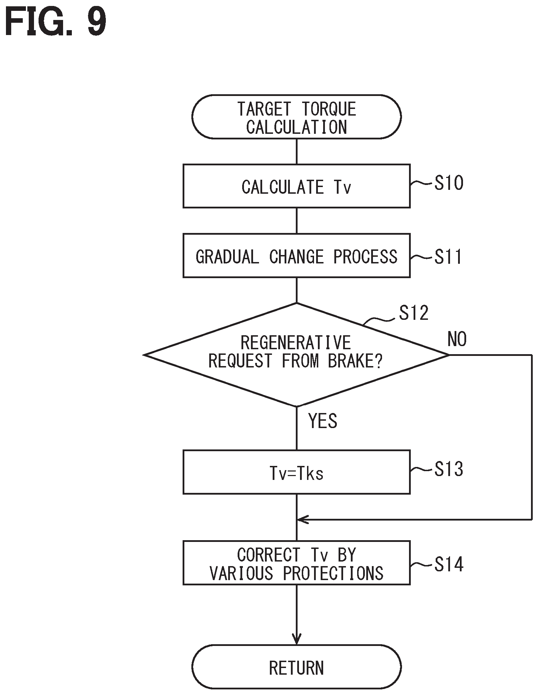

FIG. 9 is a flowchart illustrating a procedure for calculating the target torque. This series of processes is repeatedly executed at a predetermined cycle (for example, 10 ms) by the vehicle controller 50.

First, the target torque Tv is calculated (S10). More specifically, the target torque Tv of the rotary electric machine 20 is calculated based on the pedal operation amount Acc, the vehicle speed Vs, the driving mode signal Mo, the brake signal BS, and the target torque map M1 shown in FIG. 4. The target torque Tv is subjected to the gradual change process, and the target torque Tv after the gradual change process is calculated (S11).

Subsequently, it is determined whether a request for the regenerative torque Tks has been made from the brake ECU 80 (S12). In this determination, when it is determined that there is a request for the regenerative torque Tks (S12: YES), the target torque Tv is set to the regenerative torque Tks (S13). On the other hand, in this determination, when it is determined that there is no request for the regenerative torque Tks (S12: NO), the process proceeds to step S14. Correction of the target torque Tv due to various protections is performed (S14). For example, the target torque Tv is corrected in order to protect components such as the rotary electric machine 20, the inverter 30, and the storage battery 31. The corrected target torque Tv is output to the MG control unit 60 and the monitoring unit 70. After that, this series of processes is temporarily terminated.

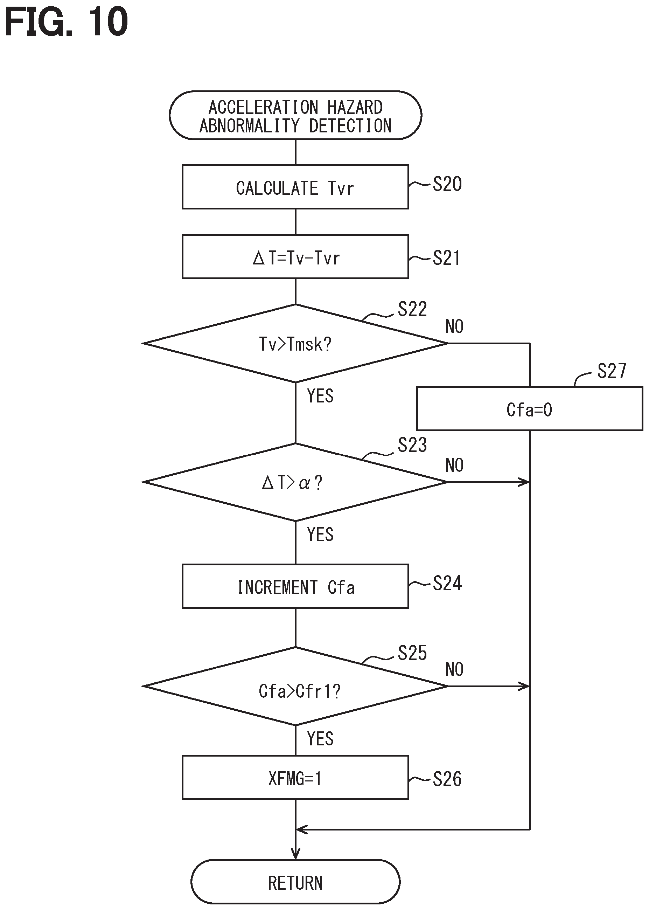

FIG. 10 is a flowchart illustrating a procedure for detecting acceleration hazard anomalies. This series of processes is repeatedly executed at a predetermined cycle (for example, 10 [ms]) by the monitoring unit 70.

First, the monitoring torque Tvr is calculated (S20). More specifically, the monitoring torque Tvr of the rotary electric machine 20 is calculated based on the pedal operation amount Acc, the vehicle speed Vs, the driving mode signal Mo, the brake signal BS, and the monitoring torque map M2, which is similar to that shown in FIG. 4. The monitoring torque Tvr is subjected to the gradual change process or a simplified gradual change process, and the monitoring torque Tvr after the gradual change process is calculated. The deviation ΔT (ΔT = Tv - Tvr) between the target torque Tv after the gradual change process and the monitoring torque Tvr after the gradual change process is calculated (S21).

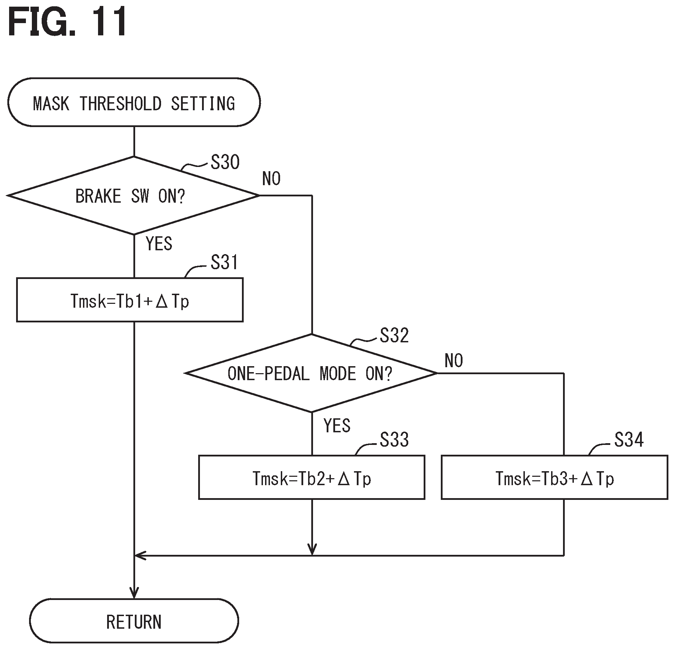

Next, it is determined whether the target torque Tv after the gradual change process is greater than the mask threshold Tmsk (S22). As explained with reference to FIGS. 6 to 8, the mask threshold Tmsk is calculated according to the procedure in the flowchart of FIG. 11. The series of processes in FIG. 11 is repeatedly executed at a predetermined cycle (for example, 10 ms) by the detection invalidation unit 70c. As shown in FIG. 11, it is determined whether the brake switch 44 is ON (S30). When it is determined that the brake switch 44 is ON (S30: YES), the mask threshold Tmsk is set to Tb1 + ΔTp. When it is determined that the brake switch 44 is not ON (S30: NO), it is determined whether the one-pedal mode is ON (S32). When it is determined that the one-pedal mode is ON (S32: YES), the mask threshold Tmsk is set to Tb2 + ΔTp. When it is determined that the one-pedal mode is not ON (S32: NO), the mask threshold Tmsk is set to Tb3 + ΔTp. Thereafter, this series of processes is temporarily terminated.

Returning to FIG. 10, when it is determined that the target torque Tv after the gradual change process is greater than the mask threshold Tmsk (S22: YES), it is determined whether the above-mentioned torque deviation ΔT is greater than the deviation threshold α (S23). The deviation threshold α is, for example, the torque of the rotary electric machine 20 required to accelerate the vehicle 10 at an acceleration of 0.1 [G]. In this determination, when it is determined that the above-mentioned torque deviation ΔT is greater than the deviation threshold α (S23: YES), a fail counter Cfa is incremented (Cfa = Cfa + 1) (S24).

Subsequently, it is determined whether the fail counter Cfa is greater than a count threshold Cfr1 (S25). The count threshold Cfr1 is, for example, a count value corresponding to 1 [s]. In this determination, when it is determined that the fail counter Cfa is greater than the count threshold Cfr1 (S25: YES), a fail flag XFMG is set to 1 (S26). An initial value of the fail flag XFMG is 0. On a condition that the fail flag XFMG is equal to 1, the monitoring unit 70 transmits a fail-safe signal Sfs to the MG control unit 60. After that, this series of processes is temporarily terminated.

Also, when it is determined in the determination of S22 that the target torque Tv after the gradual change process is not greater than the mask threshold Tmsk (S22: NO), the fail counter Cfa is set to 0 (S27). That is, the processes S23 to S26 for detecting the acceleration hazard abnormalities are not executed (are disabled). Thereafter, this series of processes is temporarily terminated. Furthermore, when it is determined in the determination of S23 that the above-mentioned torque deviation ΔT is not greater than the deviation threshold α (S23: NO), and when it is determined in the determination of S25 that the fail counter Cfa is not greater than the count threshold Cfr1 (S25: NO), this series of processes is temporarily terminated.

It should be noted that the process of S20 corresponds to the processing of the monitoring torque calculation unit 70a, the processes of S21 and S23 to S26 correspond to the processing of the abnormality detection unit 70b, and the processes of S22 and S27 correspond to the processing of the detection invalidation unit 70c.

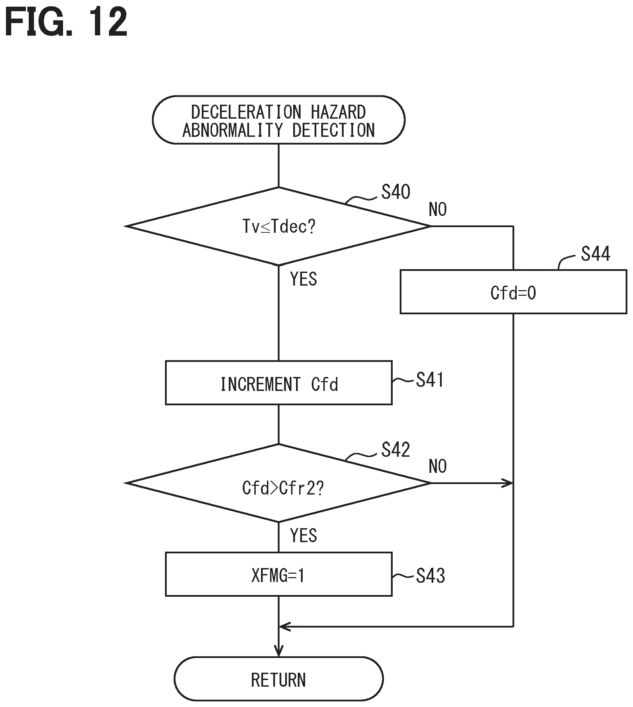

FIG. 12 is a flowchart illustrating a procedure for detecting deceleration hazard anomalies. This series of processes is repeatedly executed at a predetermined cycle (for example, 10 [ms]) by the monitoring unit 70.

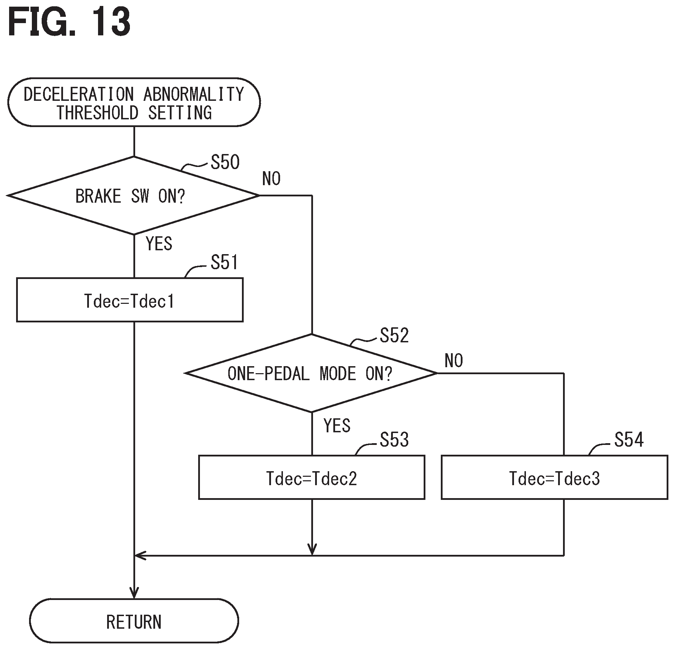

First, it is determined whether the target torque Tv after the gradual change process is less than or equal to the deceleration abnormality threshold Tdec (S40). The deceleration abnormality threshold Tdec is calculated according to the procedure in the flowchart of FIG. 13, as described with reference to FIG. 5. The series of processes in FIG. 13 is repeatedly executed at a predetermined cycle (for example, 10 [ms]) by the abnormality detection unit 70b. As shown in FIG. 13, it is determined whether the brake switch 44 is ON (S50). When it is determined that the brake switch 44 is ON (S50: YES), the deceleration abnormality threshold Tdec is set to Tdec1 (S51). When it is determined that the brake switch 44 is not ON (S50: NO), it is determined whether the one-pedal mode is ON (S52). When it is determined that the one-pedal mode is ON (S52: YES), the deceleration abnormality threshold Tdec is set to Tdec2. When it is determined that the one-pedal mode is not ON (S52: NO), the deceleration abnormality threshold Tdec is set to Tdec3. Thereafter, this series of processes is temporarily terminated.

Returning to FIG. 12, when it is determined that the target torque Tv after the gradual change process is equal to or less than the deceleration abnormality threshold Tdec (S40: YES), a fail counter Cfd is incremented (Cfd = Cfd + 1) (S41).

Subsequently, it is determined whether the fail counter Cfd is greater than the count threshold Cfr2 (S42). The count threshold Cfr2 is, for example, a count value equivalent to 1 [s]. In this determination, when it is determined that the fail counter Cfd is greater than the count threshold Cfr2 (S42: YES), the fail flag XFMG is set to 1 (S43). The initial value of the fail flag XFMG is 0. On the condition that the fail flag XFMG is equal to 1, the monitoring unit 70 transmits a fail-safe signal Sfs to the MG control unit 60. Thereafter, this series of processes is temporarily terminated.

Furthermore, in the determination of S40, when it is determined that the target torque Tv after the gradual change process is not less than or equal to the deceleration abnormality threshold Tdec (S40: NO), the fail counter Cfd is set to 0 (S44). Thereafter, this series of processes is temporarily terminated. Furthermore, in the determination of S42, when it is determined that the fail counter Cfd is not greater than the count threshold Cfr2 (S42: NO), this series of processes is temporarily terminated.

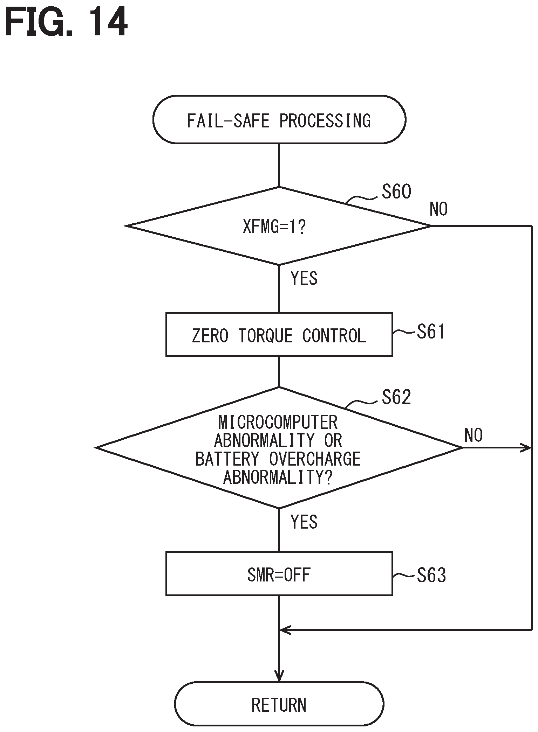

FIG. 14 is a flowchart illustrating a procedure for a fail-safe processing. This series of processes is repeatedly executed at a predetermined cycle (for example, 10 ms) by the MG control unit 60.

First, it is determined whether the fail flag XFMG is equal to 1 (S60). More specifically, it is determined whether the fail-safe signal Sfs has been received from the monitoring unit 70. When it is determined that the fail flag XFMG is equal to 1 (S60: YES), zero torque control is executed (S61). The zero torque control is a control that is executed when, even though the fail flag XFMG is equal to 1, it is still possible to control the torque generated by the rotary electric machine 20. This control gradually brings the torque generated by the rotary electric machine 20 closer to zero.

Subsequently, it is determined whether a microcomputer abnormality or an overcharge abnormality of the storage battery has occurred (S62). The microcomputer abnormality is, for example, an abnormality in which the torque generated by the rotary electric machine 20 becomes uncontrollable by the controller 100. The overcharge abnormality of the storage battery is an abnormality in which the storage battery 31 becomes overcharged. In this determination, when it is determined that the microcomputer abnormality or the battery overcharge abnormality has occurred (S62: YES), a system main relay SMR is turned OFF (S63). The system main relay SMR (not shown) is a relay that switches between supplying and cutting off electric power from the storage battery 31 to the system.

Also, when it is determined in the determination of S60 that the fail flag XFMG is not equal to 1 (S60: NO), and when a negative determination is made in the determination of S62 (S62: NO), this series of processes is temporarily terminated.

The present embodiment described above in detail has the following advantages.

The vehicle controller 50 calculates the target torque Tv, which includes the regenerative torque Tks generated by the rotary electric machine 20 through the regenerative power generation (calculated by the brake ECU 80 based on the brake operation amount Bp), based on the pedal operation amount Acc of the accelerator pedal 11 and the operating state of the brake pedal 12. Therefore, the greater the pedal operation amount Acc of the accelerator pedal 11, the larger the target torque Tv becomes (toward vehicle acceleration), and when the brake pedal 12 is operated, the target torque Tv becomes smaller (toward vehicle deceleration due to the regenerative power generation). The monitoring torque calculation unit 70a calculates the monitoring torque Tvr, which is used to monitor the target torque Tv, based on the pedal operation amount Acc of the accelerator pedal 11 and the operating state of the brake pedal 12. Therefore, the monitoring torque Tvr is calculated in the same manner as the target torque Tv. The abnormality detection unit 70b detects the acceleration hazard abnormality when the target torque Tv calculated by the vehicle controller 50 exceeds the monitoring torque Tvr calculated by the monitoring torque calculation unit 70a by more than the predetermined amount (ΔT > α). Therefore, for example, when the abnormality occurs in the vehicle controller 50 and the target torque Tv becomes greater than the driver's intention for the vehicle 10, it is possible to detect the acceleration hazard abnormality. It should be noted that the target torque Tv may also become greater than the driver's intention for the vehicle 10 due to failures, disconnections, or short circuits in components such as the accelerator sensor 40, the vehicle speed sensor 41, or the driving mode switch 43.

The detection invalidation unit 70c invalidates the detection of acceleration hazard abnormalities by the abnormality detection unit 70b when the target torque Tv is equal to or less than the mask threshold Tmsk. Therefore, when the target torque Tv is equal to or less than the mask threshold Tmsk and it is not necessary to perform the acceleration hazard abnormality detection, it is possible to reduce erroneous detection of the acceleration hazard abnormalities.

The detection invalidation unit 70c sets the mask thresholds Tmsk2 and Tmsk3, which apply when the brake pedal 12 is not being operated, to be larger than the mask threshold Tmsk1, which applies when the brake pedal 12 is being operated. Therefore, it becomes easier to appropriately set the mask threshold Tmsk according to whether the brake pedal 12 is being operated. Accordingly, when the regenerative power generation of the rotary electric machine 20 is being performed, it is possible to reduce both erroneous detection of acceleration hazard abnormalities (control abnormalities) and oversight of acceleration hazard abnormality detection.

The detection invalidation unit 70c sets the mask threshold Tmsk3, which applies when the one-pedal mode is not being executed, to be larger than the mask threshold Tmsk2, which applies when the one-pedal mode is being executed. Therefore, it becomes easier to appropriately set the mask threshold Tmsk according to whether the one-pedal mode is being executed. Accordingly, when the one-pedal mode can be executed, it is possible to reduce both erroneous detection of acceleration hazard abnormalities and oversight of acceleration hazard abnormality detection.

The detection invalidation unit 70c sets the respective mask thresholds Tmsk1, Tmsk2, and Tmsk3 based on the minimum values Tb1, Tb2, and Tb3 of the regenerative torque Tks, which are set according to the operating state of the brake pedal 12 and whether the one-pedal mode is being executed. Accordingly, it becomes easier to appropriately set the mask threshold Tmsk in response to changes in the regenerative torque Tks.

The abnormality detection unit 70b detects the deceleration hazard abnormality when the target torque Tv calculated by the vehicle controller 50 is equal to or less than the deceleration abnormality threshold. Therefore, for example, when the abnormality occurs in the vehicle controller 50 and the target torque Tv becomes smaller than the driver's intention for the vehicle 10, it is possible to detect the deceleration hazard abnormality.

The abnormality detection unit 70b sets the deceleration abnormality threshold Tdec1, which is used when the brake pedal 12 is being operated, to be smaller than the deceleration abnormality thresholds Tdec2 and Tdec3, which are used when the brake pedal 12 is not being operated. Therefore, it becomes easier to appropriately set the deceleration abnormality threshold Tdec according to whether the brake pedal 12 is being operated. Accordingly, when detecting the deceleration hazard abnormality, it is possible to reduce both the false detection of the deceleration hazard abnormalities (control abnormalities) and failure to detect actual deceleration hazard abnormalities.

The abnormality detection unit 70b sets the deceleration abnormality threshold Tdec2, which is used when the one-pedal mode is being executed, to be smaller than the deceleration abnormality threshold Tdec3, which is used when the one-pedal mode is not being executed. Therefore, it becomes easier to appropriately set the deceleration abnormality threshold Tdec according to whether the one-pedal mode is being executed. Accordingly, when the one-pedal mode can be executed, it is possible to reduce both the false detection of the deceleration hazard abnormalities (control abnormalities) and the failure to detect the actual deceleration hazard abnormalities.

The abnormality detection unit 70b sets the deceleration abnormality threshold Tdec according to the operating state of the brake pedal 12 and whether the one-pedal mode is being executed. Therefore, it becomes easier to appropriately set the deceleration abnormality threshold Tdec according to changes in the regenerative torque Tks.

The embodiment described above may be modified in the following manners. Parts identical to the parts of the above embodiment are designated by the same reference signs as the above embodiment to omit redundant description.

The processing of S30 in FIG. 11 and S50 in FIG. 13 may also be changed to a process that determines whether the brake operation amount Bp detected by the brake sensor 45 is greater than an operation amount threshold Bpr. The operation amount threshold Bpr is an operation amount at which it can be determined that the brake pedal 12 is being depressed.

The abnormality detection unit 70b may also determine that the target torque Tv is larger than the monitoring torque Tvr by a predetermined amount based on a ratio between the target torque Tv and the monitoring torque Tvr.

The detection invalidation unit 70c may also set the mask threshold Tmsk based solely on the operating state of the brake pedal 12, or solely based on whether the one-pedal mode is being executed.

The abnormality detection unit 70b may also set the deceleration abnormality threshold Tdec based solely on the operating state of the brake pedal 12, or solely based on whether the one-pedal mode is being executed. Additionally, the deceleration abnormality threshold Tdec may also be set to a fixed value regardless of the operating state of the brake pedal 12 or whether the one-pedal mode is being executed.

The one-pedal mode may also be omitted.

In the determination at S22 in FIG. 10, it is also possible to configure such that, when it is determined that the target torque Tv after the gradual change process is not greater than the mask threshold Tmsk (S22: NO), the fail-safe signal Sfs is not transmitted even when the fail flag XFMG = 1. That is, as an embodiment in which detection of acceleration hazard abnormalities by the abnormality detection unit 70b is disabled when the target torque Tv is equal to or less than the mask threshold Tmsk, the detection result of the acceleration hazard abnormality may be ignored.

The vehicle controller 50 and the monitoring torque calculation unit 70a may, instead of receiving the regenerative torque Tks from the brake ECU 80, calculate the target torque Tv and the regenerative torque Tks as the monitoring torque Tvr based on the brake operation amount Bp detected by the brake sensor 45.

The gradual change process for the target torque and the monitoring torque may also be omitted.

The controller 100 and the technique according to the present disclosure may be achieved by a dedicated computer provided by constituting a processor and a memory programmed to execute one or more functions embodied by a computer program. Alternatively, the controller 100 and the technique according to the present disclosure may be achieved by a dedicated computer provided by constituting a processor with one or more dedicated hardware logic circuits. Alternatively, the controller 100 and the method described in the present disclosure may be implemented by one or more special purpose computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium.

The above-described embodiments and the modifications can be implemented in any combination within a possible range.

Although the present disclosure has been described in accordance with embodiments, it is understood that the present disclosure is not limited to such embodiments or structures. The present disclosure encompasses various modifications and variations within the scope of equivalents. In addition, while the various elements are shown in various combinations and configurations, which are exemplary, other combinations and configurations, including more, less or only a single element, are also within the spirit and scope of the present disclosure.

## Claims

1. A controller (100) for a rotary electric machine (20), the controller being applicable to a vehicle (10) including an accelerator operation member (11), a brake operation member (12), and the rotary electric machine capable of transmitting power to drive wheels (24), the controller comprising:
a target torque calculation unit (50) configured to calculate a target torque including a regenerative torque generated by regenerative power generation of the rotary electric machine, based on an operation amount of the accelerator operation member and an operational state of the brake operation member;
a monitoring torque calculation unit (70a) configured to calculate a monitoring torque for monitoring the target torque, based on the operation amount of the accelerator operation member (11) and the operational state of the brake operation member (12);
an abnormality detection unit (70b) configured to detect an acceleration abnormality when the target torque calculated by the target torque calculation unit exceeds the monitoring torque calculated by the monitoring torque calculation unit (70a) by more than a predetermined amount; and
a detection invalidation unit (70c) configured to:
invalidate detection of the acceleration abnormality by the abnormality detection unit (70b) when the target torque is equal to or less than a mask threshold; and
set the mask threshold to be greater when the brake operation member is not operated than when the brake operation member is operated.

2. The controller for the rotary electric machine according to claim 1, wherein
the vehicle is capable of executing a one-pedal mode in which the vehicle is accelerated and decelerated based on operation of the accelerator operation member,
the target torque calculation unit is further configured to calculate the target torque, including the regenerative torque, based on whether the one-pedal mode is being executed, and
the detection invalidation unit is configured to set the mask threshold to be greater when the one-pedal mode is not being executed than when the one-pedal mode is being executed.

3. The controller for the rotary electric machine according to claim 2, wherein
the detection invalidation unit (70c) is configured to set the mask threshold based on the regenerative torque set according to the operational state of the brake operation member and whether the one-pedal mode is being executed.

4. The controller for the rotary electric machine according to any one of claims 1 to 3, wherein
the abnormality detection unit is configured to:
detect a deceleration abnormality when the target torque calculated by the target torque calculation unit is equal to or less than a deceleration abnormality threshold, and
set the deceleration abnormality threshold such that the deceleration abnormality threshold is smaller when the brake operation member is operated than when the brake operation member is not operated.

5. The controller for a rotary electric machine according to claim 4, wherein
the vehicle is capable of executing a one-pedal mode in which the vehicle is accelerated and decelerated based on operation of the accelerator operation member,
the target torque calculation unit is further configured to calculate the target torque including, the regenerative torque, based on whether the one-pedal mode is being executed, and
the abnormality detection unit is configured to set the deceleration abnormality threshold to be smaller when the one-pedal mode is being executed than when the one-pedal mode is not being executed.

6. The controller for the rotary electric machine according to claim 5, wherein
the abnormality detection unit is configured to set the deceleration abnormality threshold based on the operational state of the brake operation member and whether the one-pedal mode is being executed.

7. A control program applicable to a vehicle including an accelerator operation member, a brake operation member, and a rotary electric machine capable of transmitting power to drive wheels, the control program causing a computer to execute:
calculating a target torque including a regenerative torque generated by regenerative power generation of the rotary electric machine, based on an operation amount of the accelerator operation member and an operational state of the brake operation member;
calculating a monitoring torque for monitoring the target torque, based on the operation amount of the accelerator operation member and the operational state of the brake operation member;
detecting an acceleration abnormality when the calculated target torque exceeds the calculated monitoring torque by more than a predetermined amount; and
invalidating detection of the acceleration abnormality when the target torque is equal to or less than a mask threshold, and setting the mask threshold to be greater when the brake operation member is not operated than when the brake operation member is operated.
